(19) Europäisches Patentamt
European Patent Office
Office européen des brevets

(11) **EP 1 834 172 B1**

(12) **EUROPÄISCHE PATENTSCHRIFT**

(45) Veröffentlichungstag und Bekanntmachung des Hinweises auf die Patenterteilung:
**08.05.2019 Patentblatt 2019/19**

(21) Anmeldenummer: **05700691.8**

(22) Anmeldetag: **04.01.2005**

(51) Int Cl.:
***G01N 25/20*** *(2006.01)*

(86) Internationale Anmeldenummer:
**PCT/EP2005/000027**

(87) Internationale Veröffentlichungsnummer:
**WO 2006/072261 (13.07.2006 Gazette 2006/28)**

(54) **VERFAHREN UND VORRICHTUNG ZUR STOFFUNTERSUCHUNG**

METHOD AND DEVICE FOR ANALYZING SUBSTANCES

PROCEDE ET DISPOSITIF POUR ANALYSER UNE SUBSTANCE

(84) Benannte Vertragsstaaten:
**AT BE BG CH CY CZ DE DK EE ES FI FR GB GR HU IE IS IT LI LT LU MC NL PL PT RO SE SI SK TR**

(43) Veröffentlichungstag der Anmeldung:
**19.09.2007 Patentblatt 2007/38**

(73) Patentinhaber: **Mettler-Toledo GmbH**
**8606 Greifensee (CH)**

(72) Erfinder:
• **HÜTTER, Thomas**
  **CH-5443 Niederrohrdorf (CH)**
• **HEITZ, Christoph**
  **CH-8353 Elgg (CH)**
• **SCHAWE, Jürgen**
  **CH-8363 Bichelsee (CH)**

(74) Vertreter: **Leinweber & Zimmermann**
**European Patent Attorneys**
**Patentanwälte**
**Rosental 7**
**80331 München (DE)**

(56) Entgegenhaltungen:
**EP-A- 0 559 362        EP-A- 1 091 208**
**EP-A- 1 371 324        EP-A1- 1 494 126**
**US-A- 3 946 598        US-A- 5 788 373**
**US-B1- 6 170 984        US-B1- 6 336 741**

**Beschreibung**

Die Erfindung bezieht sich auf ein Verfahren zur Stoffuntersuchung, bei dem ein Stoff einer dynamischen Anregung ausgesetzt wird, die eine beobachtbare Antwort hervorruft, und bei dem aus dem Zusammenhang zwischen der Anregung und der Antwort eine Kenngröße des Stoffs ermittelt wird, sowie auf eine Vorrichtung zur Durchführung dieses Verfahrens.

Die Auswertung der mit derartigen Verfahren herbeigeführten Antwort eines Stoffes auf die auf den Stoff einwirkende Anregung erlaubt die Bestimmung von Stoffeigenschaften und Stoffparametern entsprechenden Kenngrößen des Stoffes in dem von der Beobachtung erfaßten Analyseintervall. Bei dem der Anregung ausgesetzten Stoff kann es sich sowohl um einen Reinstoff als auch um ein System oder Gemisch von Stoffen oder Materialien handeln. Ein weithin bekanntes Beispiel für ein solches Verfahren ist die dynamische Thermoanalyse, bei der die Anregung durch ein vorgegebenes zeitliches Temperaturprogramm erfolgt, welchem der Stoff ausgesetzt und als Antwort der von der Probe hervorgerufene Wärmestrom erfaßt wird. Häufig wird dieses Verfahren als Differenzmethode ausgeführt, bei welcher der Stoff und ein bekannter Referenzstoff gemäß dem Temperaturprogramm angeregt und als Antwort die Differenz zwischen den von dem Stoff und dem Referenzstoff hervorgerufenen Wärmeströmen herangezogen wird. Ein anderes bekanntes Beispiel ist die thermomechanische Analyse, bei der als Antwort eine Längenänderung eines aus dem Stoff gebildeten Probekörpers in Abhängigkeit von einem vorgegebenen Temperaturprogramm beobachtet wird.

Bei einem derartigen bekannten Differenzthermoanalyseverfahren (EP 0 559 362 A1) besteht das die Anregung bildende Temperaturprogramm aus einer linear ansteigenden Rampe, der eine periodische Temperaturmodulation vorgegebener Frequenz und vorgegebener Amplitude überlagert ist. Die Auswertung der als Antwort erhaltenen modulierten Wärmestromdifferenz beruht auf einer Aufspaltung des diese Wärmestromdifferenz darstellenden gemessenen Antwortsignals in zwei Signalkomponenten. Die eine Signalkomponente wird durch Mittelwertbildung über jeweils eine oder mehrere Modulationsperioden gewonnen, stellt also eine in dem Antwortsignal enthaltene Gleichkomponente dar. Bei der anderen Signalkomponente handelt es sich um die in dem Antwortsignal enthaltene Wechselkomponente, die mit der vorgegebenen Modulationsfrequenz oszilliert und durch Differenzbildung zwischen dem gemessenen Antwortsignal und seiner Gleichkomponente ermittelt wird. Diese Art der Anregung und Auswertung des Antwortsignals beruht auf der Anwendung einer einzigen fest vorgegebenen Modulationsfrequenz, wodurch selektiv nur solche Ereignisse angeregt werden, die zu derselben Frequenz oder deren Oberwellen gehören.

Diese Beschränkung auf eine einzige Anregungsfrequenz vermeidet ein anderes bekanntes Thermoanalyseverfahren (EP-A-1 091 208), das eine stochastische Anregung vorsieht und das Antwortsignal bei dessen Auswertung einer Korrelationsanalyse unterzieht. Allerdings steigt bei der Korrelationsanalyse, wenn eine hohe Genauigkeit gefordert wird, die notwendige Meßzeit an.

Isermann, R. "Identifikation dynamischer Systeme", Band I (1998), Seiten 1 bis 6, 17, *4 bis 39, 63, 64, erörtert die experimentelle Analyse von Systemen, die nach DIN 66201 als eine abgegrenzte Anordnung von aufeinander einwirkenden Gebilden verstanden werden, mit u.a. parametrischen Modellen und weist darauf hin, dass hierdurch die wirkliche innere Struktur nicht beschrieben werden kann.

Die prioritätsältere, nicht veröffentlichte EP-1494126-A1 offenbart zwar die Verwendung parametrischer Modelle zur Stoffuntersuchung und die experimentelle Bestimmung der Parameterwerte des Modells. Hinsichtlich der Herleitung der Kennwerte des untersuchten Stoffs ist für den Fall der Thermoanalyse angegeben, dass das Integral der Impulsantwortfunktion die Wärmekapazität liefert und ihre Fouriertransformation die Änderung der Wärmekapazität mit der Frequenz enthält.

Der Erfindung liegt die Aufgabe zugrunde, ein Verfahren der eingangs genannten Art zu schaffen, das für weitgehend beliebige Anregungen eine wirkungsvolle Auswertung der Antwort ermöglicht, sowie eine Vorrichtung zur Durchführung dieses Verfahrens anzugeben.

Erfindungsgemäß wird diese Aufgabe hinsichtlich des Verfahrens durch die Merkmale des unabhängigen Patentanspruchs 1 und in vorrichtungsmässiger Hinsicht durch die Merkmale des unabhängigen Patentanspruchs 31 gelöst.

Nach der erfindungsgemäß durchgeführten Berechnung der Transferfunktion geben die daraus berechnete Kenngröße bzw. die daraus berechneten Kenngrößen charakteristische Eigenschaften des Stoffs mit hoher Genauigkeit wieder. Dabei kann die Anregung, insbesondere ihr zeitlicher Verlauf und das entsprechende Frequenzspektrum, frei gewählt und dadurch so angepaßt werden, daß die Auffindung bestimmter Stoffeigenschaften begünstigt wird. Die Werte der Antwort werden durch Messung ermittelt. Die Werte der Anregung können bekannt sein oder ebenfalls durch Messung ermittelt werden. Sofern die Anregung in einer zur Durchführung des Verfahrens bestimmten Vorrichtung in Abwesenheit des zu untersuchenden Stoffs hervorgerufen wird, können aus dem Modell anstelle der charakteristischen Größen des Stoffs die charakteristischen Größen dieser Vorrichtung bestimmt werden.

Ein besonders wichtiges Aspekt besteht darin, daß das Modell als zeitinvariant und linear angesetzt wird. Dieses Aspekt berücksichtigt den Umstand, daß in vielen Fällen der Zusammenhang zwischen der Anregung und der Antwort zumindest näherungsweise linear und zeitinvariant ist. In einem solchen linearen, zeitinvarianten Modell läßt sich der Zusammenhang zwischen dem der Anregung entsprechenden Eingangssignal und dem der Antwort entsprechenden Ausgangssignal bekanntlich in Form einer Differentialgleichung darstellen, deren Koeffizienten die Modellparameter sind. Im zeitdiskreten Fall wird zur Bestimmung der Parameter des Modells eine Zeitreihe zeitlich gleich beabstandeter Werte der Anregung und zugehöriger Meßwerte der Antwort verwendet, wobei der Zeitabstand durch das Abtastintervall bestimmt ist. In diesem Fall wird bekanntlich die Differentialgleichung des zeitkontinuierlichen Falls durch die entsprechende Differenzengleichung approximiert. Die Approximation ist um so besser, je kleiner das Abtastintervall oder je höher die Abtastrate ist.

Diese Differenzengleichung hat die Form

$$y_k = - a_1 \cdot y_{k-1} - a_2 \cdot y_{k-2} - ..... - a_{na} \cdot y_{k-na} \\ + b_1 \cdot u_{k-1} + b_2 \cdot u_{k-2} + ..... + b_{nb} \cdot u_{k-nb} + \varepsilon_k \qquad (1)$$

In Gleichung (1) bezeichnen die Indizes k, k-1, ... die diskreten Werte der Abtastzeitpunkte, $y_k$ und $U_k$ die Werte der Antwort bzw. der Anregung an diesen Abtastzeitpunkten, $a_1$, $a_2$, ..., $a_{na}$ die Koeffizienten der Antwortwerte und $b_1$, $b_2$, ..., $b_{nb}$ die Koeffizienten der Anregungswerte. Dabei ist in Gleichung (1) ohne Beschränkung der Allgemeinheit angenommen worden, daß $a_0 = 1$. Ferner wurde angenommen, daß der Koeffizient $b_0$ Null ist, weil dies in der Regel bei realen Systemen der Fall ist, da in der Praxis eine instantane Wirkung der Anregung auf die Antwort nicht vorkommt. Es wird jedoch darauf hingewiesen, daß ein von Null verschiedener Wert für $b_0$ in die obige Gleichung (1) eingeschlossen werden könnte, ohne daß sich dadurch die im folgenden beschriebene Behandlung ändert.

Schließlich ist auf der rechten Seite von Gleichung (1) noch ein Fehlerglied $\varepsilon_k$ hinzugefügt worden, das die Abweichung berücksichtigt, die zwischen dem Modell und dem tatsächlich gemessenen Prozeß auftritt.

Faßt man die in Gleichung (1) auftretenden Werte der Anregung und der Antwort als Wertevektor $\varphi_k$ gemäß

$$\varphi_k = [-y_{k-1}, -y_{k-2}, ..... - y_{k-na}, u_{k-1}, u_{k-2}, ..., u_{k-nb}] \qquad (2)$$

zusammen und die gesuchten Parameterwerte als Parametervektor $\Theta$ gemäß

$$\Theta = [a_1, a_2, ... a_{na}, b_1, b_2, ..., b_{nb}]^T \qquad (3)$$

so nimmt Gleichung (1) in Matrixschreibweise die Form an

$$y_k = \varphi_k \cdot \Theta + \varepsilon_k \qquad (4)$$

Zur vollständigen Bestimmung des Parametervektors $\Theta$ sind somit $n_a + n_b$ Gleichungen erforderlich, was eine ausreichende Zeitreihe von Abtastzeitpunkten k, k-1, ... k-n, also ein hinreichend langes Meßzeitfenster, erfordert.

Das Gleichungssystem wird derart aufgelöst, daß der Gleichungsfehler $\varepsilon_k$ minimiert wird. Dies kann beispielsweise durch die Methode der kleinsten Quadrate geschehen.

Falls das Verfahren auf ein System angewendet werden soll, bei dem der Zusammenhang zwischen dem Anregungssignal und dem Antwortsignal einen nichtlinearen Anteil enthält, der nicht vernachlässigt werden kann oder soll, können in einer ersten Alternative alle mit der Nichtlinearität zusammenhängenden Anteile in der Anregung und/oder der Antwort abgezogen und nur die solchermaßen erhaltenen Differenzsignale der Auswertung mittels des linearen zeitinvarianten Modells unterzogen werden. Dies setzt allerdings voraus, daß die nichtlinearen Teile bekannt sind oder auf irgendeine Weise bestimmt werden können.

Dagegen ist in einer zweiten Alternative vorgesehen, daß das zeitinvariante, lineare Modell erweitert wird, indem ein zur Berücksichtigung eines nichtlinearen Anteils in der Antwort dienender mathematischer Ausdruck hinzugefügt wird. Die Bestimmungsgrößen dieses mathematischen Ausdrucks können zusammen mit den Modellparametern aus der Anregung und der Antwort im Zeitbereich bestimmt werden. Die Antwort $y_s(t)$ wird in diesem Fall in der Form

$$y_s(t) = X(t) + y(t) \qquad (5)$$

dargestellt, wobei y(t) der lineare Anteil und X(t) der nichtlineare Anteil ist. Diese zweite Alternative ist vor allem für die häufig vorkommenden Verhältnisse von Interesse, in denen der nichtlineare Anteil X(t) der Antwort $y_s(t)$ im Vergleich zu deren linearem Anteil y(t) nur langsam veränderlich ist. Dies ist beispielsweise bei der dynamischen Thermoanalyse der Fall. Dort setzt sich der der Antwort entsprechende Wärmefluß aus einem schnellen Änderungen der der Heizrate entsprechenden Anregung folgenden, reversiblen Wärmefluß, der mit der Wärmekapazität des Stoffs zusammenhängt, und einem nichtreversiblen Wärmefluß zusammen, der durch thermische Ereignisse in dem Stoff (beispielsweise Phasenumwandlungen oder chemische Reaktionen) bestimmt ist. Weil thermische Ereignisse in der Regel eine gewisse Zeit benötigen, kann der damit verbundene Wärmefluß schnellen Änderungen der Anregung nicht folgen und ist relativ langsam veränderlich.

Deshalb ist in solchen Fällen die Dauer des für die Berechnung der Modellparameter erforderlichen Meßzeitfensters im Verhältnis zur Veränderung des nichtlinearen Anteils X(t) so kurz, daß letzterer sich als eine Konstante manifestiert, also in dem jeweiligen Zeitfenster als

$$X = c \qquad (6)$$

angesetzt werden kann. Bei einer signifikanten Änderung innerhalb des Zeitfensters kann statt dessen ein linearer Ansatz gewählt werden

$$X(t) = c_0 + c_1 \cdot (t - t_0) \qquad (7)$$

Dabei bedeutet $t_0$ eine frei wählbare Konstante. Zweckmäßigerweise wird man für $t_0$ den Zeitpunkt wählen, der in der Mitte des jeweils verwendeten Zeitfensters liegt. Falls auch dieser lineare Ansatz im Rahmen der geforderten Genauigkeit nicht ausreicht, lassen sich in analoger Weise in den Ansatz für X(t) auch quadratische Terme oder solche noch höherer Ordnung oder andere Funktionen einschließen. Auf diese Weise wird durch die Auswertung sowohl der lineare oder reversible Anteil als auch der nichtlineare oder nichtreversible Anteil des Antwortsignals getrennt bestimmt.

Bei dieser Hinzufügung eines nichtlinearen Anteils tritt auf der rechten Seite von Gleichung (1) jeweils noch ein entsprechender Term hinzu. Dies bedeutet, daß der Parametervektor $\Theta$ um entsprechende Parameter zu erweitern ist, welche bei der Lösung des Gleichungssystems ebenfalls berechnet werden. Analog ist der Vektor $\varphi_k$ zu erweitern.

Wenn man beispielsweise die Gleichung (7) verwendet, gilt:

$$\varphi_k = [1, t, -y_{k-1}, -y_{k-2}, \ldots - y_{k-na}, u_{k-1}, u_{k-2}, \ldots, u_{k-nb}] \qquad (8)$$

und

$$\Theta = [\gamma_1, \gamma_2, a_1, a_2, \ldots a_{na}, b_1, b_2, \ldots, b_{nb}]^T$$

wobei gilt:

$$\gamma_1 = c_0 \cdot (1 + a_1 + \ldots + a_{na}) - c_1 \cdot (a_1 + 2a_2 + \ldots + pa_{na}) \qquad (9)$$

$$\gamma_2 = c_1 \cdot (1 + a_1 + \ldots + a_{na}) \qquad (10)$$

Es gilt dann wieder die Gleichung (4), wobei der Vektor $y_k$ aus den gemessenen Werten von $y_s(t)$ in Gleichung (5) aufgebaut ist.

Der in der Gleichung (1) angegebene Ansatz für die Beschreibung des zeitdiskreten linearen zeitinvarianten Systems läßt sich in bekannter Weise durch z-Transformation in die Form

$$y(z) = H(z)u(z) \qquad (11)$$

bringen, wobei $y(z)$ und $u(z)$ die z-Transformierten der Antwort $y(t)$ bzw. der Anregung $u(t)$ und $H(z)$ die z-Transformierte der Transferfunktion sind. Bekanntlich ist dabei die Variable z definiert als

$$z = e^{T_0 s} \qquad (11a)$$

wobei $T_0$ der zeitliche Abstand zwischen den Abtastzeitpunkten, also das Abtastintervall, ist und der Imaginärteil der Variablen s der Frequenz $\omega$ entspricht. Im folgenden wird ohne Beschränkung der Allgemeinheit die Zeiteinheit $T_0 = 1$ gesetzt.

Dabei nimmt $H(z)$ die Form

$$H(z) = \frac{B(z)}{A(z)} \qquad (12)$$

an, wobei $B(z)$ und $A(z)$ Polynome vom Grad $n_b$ bzw. $n_a$ der Variablen z mit den Koeffizienten $b_1$, ..., $b_{nb}$ bzw. $a_1$, ..., $a_{na}$ aus Gleichung (1) sind. Es hat sich gezeigt, daß dieser rationale Ausdruck für $H(z)$ viele praktische Fälle exakt oder in hinreichend guter Näherung beschreibt.

Damit kann Gleichung (11) in der Form

$$A(z)y(z) = B(z)u(z) \qquad (13)$$

geschrieben werden. In dieser Darstellung ist sie auch auf Mehrgrößensysteme anwendbar, bei denen die Anregung aus mehr als einem Eingangssignal besteht und/oder die Antwort aus mehr als einem Ausgangssignal besteht. $A(z)$ ist dann eine Matrix, die für jedes Ausgangssignal der Antwort die Koeffizienten des zugehörigen Nennerpolynoms enthält. $B(z)$ ist eine Matrix, die für jedes Eingangssignal der Anregung die Koeffizienten des zugehörigen Zählerpolynoms enthält. Der Fachmann begegnet keinen besonderen Schwierigkeiten, wenn er die angegebenen Gleichungen auf Mehrgrößensysteme anwenden will. Hinweise dazu finden sich in Lehrbüchern, z. B. im MatLab User Manual: System Identification Toolbox User's Guide; The MathWork, Inc. - November 2000, 4th printing for version 5.0 (Release 12), pages 3-37 - 3-39. Die obige Erläuterung des Prinzips des Verfahrens anhand des Beispiels mit einem Eingangssignal $u(t)$ der Anregung und einem Ausgangssignal $y(t)$ bzw. $y_s(t)$ der Antwort darf daher nicht im einschränkenden Sinn verstanden werden. Vielmehr umfaßt das Verfahren auch Anregungen mit mehr als einem Anregungssignal und/oder Antworten mit mehr als einem Antwortsignal.

Zur Bestimmung der Modellstruktur wird im Rahmen der Erfindung zweckmäßigerweise in der Differenzengleichung die Anzahl $n_a$ der Koeffizienten der Antwortwerte $y_i$ und die Anzahl $n_b$ der Koeffizienten der Anregungswerte $u_m$ fest vorgegeben. Zur Optimierung der Modellstruktur können diese Anzahlen variiert werden, bis der durch das Modell beschriebene Zusammenhang zwischen der Anregung und der Antwort mit den Meßwerten möglichst gut übereinstimmt.

Eine besonders wichtige Anwendung erfährt die Erfindung auf dem bekannten Gebiet der dynamischen Thermoanalyseverfahren. Bei diesen besteht das Anregungssignal häufig aus der Überlagerung einer konstanten Heizrate $\beta_u$ mit einem periodisch oder nichtperiodisch veränderlichen Anteil $u_t$, so daß für die gesamte Heizrate, d. h. die Zeitableitung der Temperatur, gilt

$$\frac{dT}{dt} = \beta_u + u_t(t) \qquad (14)$$

Eine wichtige Klasse dieser Verfahren besteht darin, daß das Antwortsignal einem Wärmestrom eines dynamischen Thermoanalyseverfahrens entspricht.

Dieser Wärmestrom enthält für das vorstehend angegebene Anregungssignal einen reversiblen linearen Anteil $y(t)$, der dem veränderlichen Anteil $u(t)$ der Heizrate folgt, und einen nichtreversiblen Anteil, der etwa als zeitlich lineare Funktion beschrieben werden kann, wodurch sich insgesamt die Darstellung ergibt

$$\frac{dQ}{dt} = \alpha_0 + \alpha_1 t + y(t) \tag{15}$$

Das vorstehend erörterte Gleichungssystem nimmt für diesen Fall die Form an

$$y_k = \gamma_1 + \gamma_2 \cdot t_k - a_1 \cdot y_{k-1} - a_2 \cdot y_{k-2} \ldots - a_{na} \cdot y_{k-na} + b_1 \cdot u_{k-1} + b_2 \cdot u_{k-2} \ldots + b_{nb} \cdot u_{k-nb}$$

$$\Theta = \begin{bmatrix} \gamma_1 & \gamma_2 & a_1 & a_2 & . & . & a_{na} & b_1 & b_2 & . & . & b_{nb} \end{bmatrix}^T$$

$$\alpha_1 = \frac{\gamma_2}{1 + \sum\limits_{i=1}^{na} a_i} \qquad \alpha_0 = \frac{\gamma_1 + \alpha_1 \cdot \left( \sum\limits_{i=1}^{na} i \cdot a_i \right)}{1 + \sum\limits_{i=1}^{na} a_i} \tag{16}$$

Hierin bestimmen die Parameter $a_1$, $a_2$, ..., $a_{na}$, $b_1$, $b_2$, ..., $b_{nb}$ den durch das zeitinvariante lineare Modell beschriebenen reversiblen Anteil und die Parameter $\gamma_1$, $y_2$ den nichtreversiblen Anteil. Mit den solchermaßen bestimmten Parametern $a_1$, $a_2$, ..., $a_{na}$, $b_1$, $b_2$, ..., $b_{nb}$ wird die z-Transformierte H(z) der Transferfunktion gemäß Gleichung (12) bestimmt. Für das Argument z werden Werte der Form

$$z = e^{j\omega} \tag{17}$$

eingesetzt. Für diese Werte ist die z-transformierte Übertragungsfunktion H(z) eine Funktion der Frequenz $\omega$, die in der Form

$$H(z) = H(e^{j\omega}) = G(j\omega) = \text{Re}\, G(j\omega) + \text{Im}\, G(j\omega) \tag{18}$$

geschrieben werden kann. Der Wert der Funktion G für die Frequenz $\omega = 0$ liefert die Wärmekapazität des Stoffs gemäß

$$c_p = \frac{1}{m} G(0) \tag{19}$$

wobei m die Masse der untersuchten Stoffprobe ist.
Aus dem Betrag der Funktion G

$$\left| G(j\omega) \right| = \sqrt{[\text{Re}\, G(j\omega)]^2 + [\text{Im}\, G(j\omega)]^2} \tag{20}$$

und ihrem Phasenwinkel

$$\text{phase } G(j\omega) = \arctan \frac{\text{Im } G(j\omega)}{\text{Re } G(j\omega)} \qquad (21)$$

ergibt sich die frequenzabhängige komplexe Wärmekapazität $c^*_p$ gemäß

$$c^*_p = \frac{1}{m}\left|G(j\omega)\right| \qquad (22)$$

sowie der Real- und Imaginärteil gemäß

$$c_p{}' = c^*_p \cos(\text{phase})$$
$$c_p{}'' = c^*_p \sin(\text{phase}) \qquad (23)$$

Durch die Bestimmung der Parameter des Modells und damit der Transferfunktion ist es also möglich, Kenngrößen des Stoffs für verschiedene Frequenzen $\omega$ auszuwerten.

Wärmeströme können dadurch gemessen werden, daß eine Temperaturdifferenz erfaßt wird, die längs des Wärmestrompfades auftritt. Dabei ist aber zu berücksichtigen, daß die Wärmeströme außer dem durch den zu untersuchenden Stoff hervorgerufenen Wärmestromanteil weitere Anteile enthalten, die durch das für die Durchführung des Thermoanalyseverfahrens verwendete kalorimetrische System hervorgerufen sind. In diesem Fall liefert die Auswertung durch das erfindungsgemäße Verfahren den gesamten Wärmestrom einschließlich seiner systembedingten Anteile. Die erfindungsgemäße Auswertung ist jedoch auch bei solchen Verfahren anwendbar, bei denen der Wärmestrom eine Differenz von Wärmeströmen zu einer Probe des Stoffs und einem bekannten Referenzstoff ist. Bei diesen Differenzverfahren ist der systembedingte Anteil kleiner.

Das erfindungsgemäße Verfahren ist auch mit Vorteil in dem Fall anwendbar, in dem die Probe einer inerten Referenzprobe entspricht oder in dem das System ohne Probe angeregt wird. In diesem Fall liefert das Verfahren die Geräteeigenschaften.

Weiter ist das erfindungsgemäße Verfahren mit Vorteil für den Fall anwendbar, daß das Antwortsignal einer Temperaturdifferenz eines bekannten dynamischen Thermoanalyseverfahrens (DTA) entspricht.

Das erfindungsgemäße Auswerteverfahren ist ferner mit Vorteil in dem Fall anwendbar, daß das Antwortsignal einer Heizleistungsdifferenz eines dynamischen Leistungskompensations-Thermoanalyseverfahrens entspricht. Bei dem Leistungskompensationsverfahren werden die Probe des zu untersuchenden Stoffs und ein bekannter Referenzstoff mit unterschiedlicher Heizleistung derart angeregt, daß die Temperaturdifferenz zwischen Proben und Referenz stets auf Null geregelt wird. In diesem Fall besteht die auszuwertende Antwort der Probe in ihrer im Vergleich zur Referenz unterschiedlichen Leistungsaufnahme.

Weiter ist das erfindungsgemäße Verfahren mit Vorteil für den Fall anwendbar, daß das Antwortsignal einer Längenänderung eines dynamischen thermomechanischen Analyseverfahrens entspricht. Unter der Einwirkung des dem Anregungssignal entsprechenden Temperaturprogramms kann in einer schrumpffähigen Probe gleichzeitig eine thermische Ausdehnung und eine sie überdeckende Schrumpfung auftreten. Mit Hilfe der erfindungsgemäßen Auswertung läßt sich gleichzeitig das Ausdehnungsverhalten als reversibler Anteil und das Schrumpfverhalten als nichtreversibler Anteil bestimmen.

Allgemein ist noch darauf hinzuweisen, daß die Anregung von vornherein bekannt sein kann, so daß deren Werte nicht gemessen werden müssen. Dies ist jedoch keine notwendige Voraussetzung für die Erfindung. Vielmehr kann die Anregung unbekannt sein und ihre Werte durch Messung ermittelt werden. In diesem Fall ist eine zur Durchführung des Verfahrens geeignete Vorrichtung mit einer zur Messung der Werte der Anregung dienenden Meßeinrichtung versehen.

In der folgenden Beschreibung wird die Erfindung unter Bezugnahme auf die Zeichnung näher erläutert. Es zeigt:

Fig. 1   eine schematische Darstellung eines Differenzkalorimeters zur Durchführung einer Ausführungsform des erfindungsgemäßen Verfahrens,

Fig. 2   eine schematische Darstellung der bei dieser Ausführungsform des erfindungsgemäßen Verfahrens stattfindenden Auswertung,

Fig. 3    ein Schema zur Veranschaulichung der Auswertung zur Bestimmung von Modellparametern, und

Fig. 4    ein Schema zur Veranschaulichung der Berechnung von Antwortwerten durch das Modell.

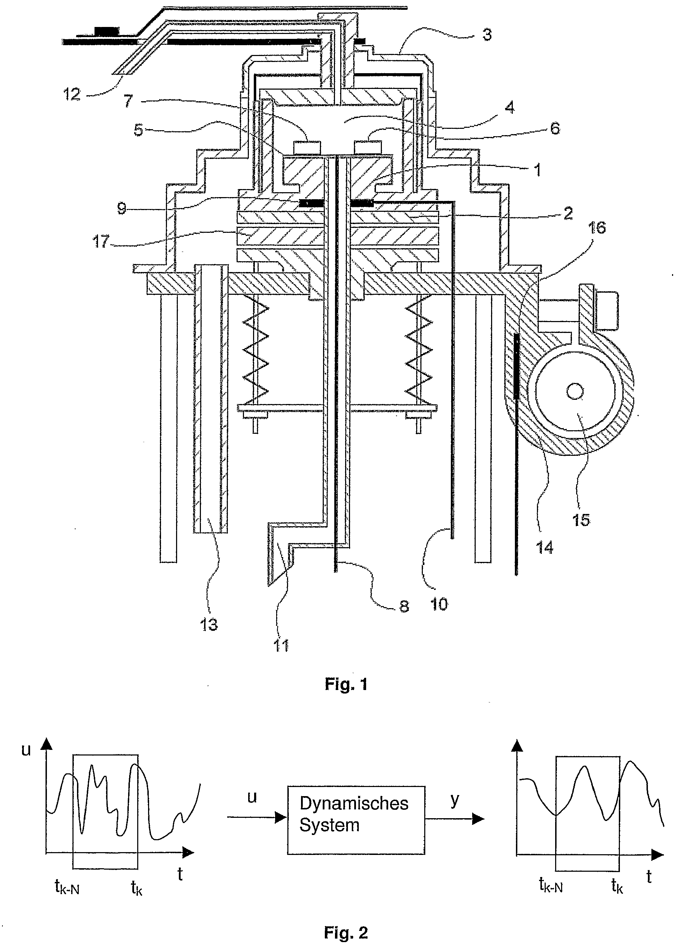

Gemäß dem in Fig. 1 dargestellten Vertikalschnitt weist ein Differenzkalorimeter einen hohlen zylindrischen Ofenblock 1 aus Silber auf, der von einer flachen Widerstandsheizung 2 beheizbar ist. Der Ofenblock 1 ist an seinem oberen Ende von einer Deckelanordnung 3 abgeschlossen, die abgenommen werden kann, um einen Zugang in das Innere 4 des Ofenblocks 1 zum Zwecke der Beschickung zu ermöglichen.

Im Inneren 4 des Ofenblocks 1 erstreckt sich ein scheibenförmiges Substrat 5, das mit dem Ofenblock 1 thermisch gekoppelt ist.

Auf der sich horizontal erstreckenden oberen Radialebene des scheibenförmigen Substrats 5 befindet sich eine Position zur Aufnahme eines Probentiegels 6 und eine dazu thermisch symmetrisch angeordnete Position zur Aufnahme eines Referenztiegels 7. Die Positionen des Probentiegels 6 und des Referenztiegels 7 sind mit je einer Thermoelementanordnung versehen. In dem dargestellten Ausführungsbeispiel sind zwei elektrisch entgegengesetzte Enden der beiden Thermoelementanordnungen auf dem Substrat 5 zusammengeschaltet, während die beiden anderen Enden auf zwei nur schematisch angedeuteten Signalleitungen 8 aus dem Ofenblock 1 herausgeführt sind. Dies hat zur Folge, daß auf den beiden Leitungen 8 ein dem Temperaturunterschied $\Delta T$ zwischen der Probenposition und der Referenzposition entsprechendes thermoelektrisches Signal auftritt. Dieses thermoelektrische Signal entspricht in bekannter Weise der Differenz der beiden Wärmeströme, die zwischen dem Ofenblock 1 und dem Probentiegel 6 einerseits sowie dem Ofenblock 1 und dem Referenztiegel 7 andererseits fließen.

Die Widerstandsheizung 2 ist in nicht dargestellter Weise an eine gesteuerte Leistungsquelle angeschlossen, welche elektrische Heizenergie liefert. Die Steuerung erfolgt derart, daß ein vorgegebener dynamischer Temperaturverlauf als Funktion der Zeit durchlaufen wird. Dieser Temperaturverlauf wird mit einem in dem Ofenblock 1 angeordneten Platinthermometer 9 erfaßt, dessen Ausgangssignal auf einer schematisch dargestellten Signalleitung 10 aus dem Ofenblock 1 herausgeführt ist. Die Signalleitungen 10 führen also ein Signal, das dem vorgegebenen Temperaturverlauf entspricht.

Die Bezugszeichen 11, 12 und 13 bezeichnen eine Spülgaszuführungsleitung, eine Spülgasabführungsleitung bzw. eine Trockengaszuführungsleitung. Ferner bezeichnen in bekannter Weise die Bezugszeichen 14, 15 und 16 einen Kühlflansch, einen Kühlfinger bzw. ein Platinthermometer. Zwischen der Kühlanordnung 14, 15 und der Widerstandsheizung 2 ist ein Wärmewiderstand 17 angeordnet.

Bei diesem Differenzkalorimeter dient der Temperaturverlauf, dem eine Probe in dem Probentiegel 6 innerhalb des Ofenblocks 1 ausgesetzt ist, als Anregung. Das den Temperaturverlauf darstellende Signal auf der Signalleitung 10 wird von einer Auswerteeinrichtung mit hinreichend großer Abtastrate abgetastet und nach der Zeit differenziert, wodurch die Zeitableitung des Temperaturverlaufs, d. h. die Heizrate, erhalten wird. Synchron dazu wird auch das auf der Signalleitung 8 auftretende Temperaturdifferenzsignal $\Delta T$ abgetastet, das den Differenzwärmestrom als Antwort auf die Anregung darstellt.

Auf diese Weise erhält man eine Zeitreihe von Meßpunkten des durch die Heizrate gegebenen Anregungssignals $u(t_k)$, $u(t_{k-1})$, ... sowie des Antwortsignals $y(t_k)$, $y(t_{k-1})$, .... Dies ist schematisch in Fig. 2 dargestellt. In Fig. 2 bezeichnet die Reihe der zwischen $t_k$ und $t_{k-N}$ eingerahmten Meßwerte ein Auswertefenster mit einer zur Lösung des vorstehend erörterten Gleichungssystems (4) bzw. (16) ausreichenden Anzahl von Meßpunkten. Dies bedeutet, daß $N \geq (n_a + n_b)$ ist. Für jede Lage des Auswertefensters innerhalb des gesamten gemessenen Temperaturverlaufs werden somit die Parameterwerte des Modells neu bestimmt. Mit den solchermaßen bestimmten Parametern läßt sich die z-Transformierte der Übertragungsfunktion gemäß Gleichung (12) bestimmen.

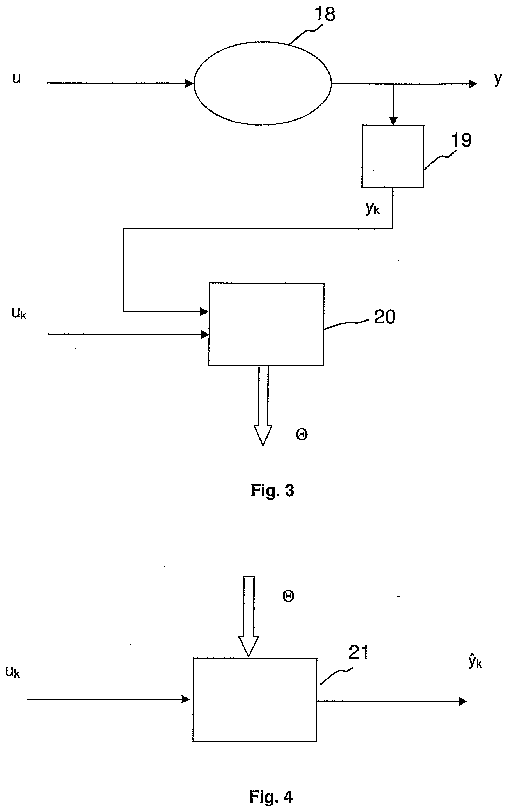

Dies ist in Fig. 3 näher veranschaulicht. Dort ist mit u das Anregungssignal und mit y das Antwortsignal bezeichnet. $u_k$ bezeichnet den entweder von vornherein bekannten oder durch Messung ermittelten Wert des Anregungssignals $u(t_k)$ zum Abtastzeitpunkt $t_k$. Ebenso bezeichnet $y_k$ den Meßwert des Antwortsignals $y(t_k)$ zum Abtastzeitpunkt $t_k$. $\Theta$ steht für den vorstehend in Gleichung (3) angegebenen Vektor der Parameterwerte.

Mit diesen Bezeichnungen veranschaulicht Fig. 3 die Einwirkung der Anregung u auf die Stoffprobe 18 und die von der Stoffprobe 18 darauf ansprechend abgegebene Antwort y. Eine Meßeinrichtung 19 tastet die Antwort y ab und liefert die Abtastwerte $y_k$ an eine Auswerteeinrichtung 20. Letzterer werden auch die in Fig. 3 als bekannt vorausgesetzten Werte $u_k$ der Anregung zugeführt. Mittels dieser Eingangswerte bestimmt die Auswerteeinrichtung 20 in der vorstehend anhand der Gleichungen (1) bis (16) dargelegten Weise den Vektor $\Theta$ der Parameterwerte.

Fig. 4 symbolisiert das Einsetzen des gemäß Fig. 3 erhaltenen Vektors $\Theta$ der Parameterwerte in das mathematische Modell 21. Letzteres modelliert damit den Zusammenhang zwischen der Anregung und der Antwort. Dadurch könnten auch, wie in Fig. 4 dargestellt, zu beliebigen Werten $u_k$ der Anregung entsprechende Schätzwerte $\hat{y}_k$ der Antwort berechnet werden.

In dem vorstehenden Beispiel stellt das Antwortsignal die Wärmestromdifferenz zwischen Probe und Referenz dar. Bei der thermomechanischen Analyse wird dagegen als Antwortsignal die Längenänderung einer dem Temperaturverlauf ausgesetzten Probe als Antwort erfaßt.

Die vorstehend erläuterte Auswertung ist praktisch für alle Signalformen des dynamischen Anregungssignals u(t) geeignet. Insbesondere kann das Anregungssignal ein stochastisches Signal oder ein pseudostochastisches Signal sein, bei dem sich eine stochastische Signalfolge endlicher Dauer wiederholt.

Verzeichnis der Bezugszeichen

| | |
|---|---|
| 1 | Ofenblock |
| 2 | Widerstandsheizung |
| 3 | Deckelanordnung |
| 4 | Inneres |
| 5 | Substrat |
| 6 | Probentiegel |
| 7 | Referenztiegel |
| 8 | Signalleitung |
| 9 | Platinthermometer |
| 10 | Signalleitung |
| 11 | Spülgaszuführungsleitung |
| 12 | Spülgasabführungsleitung |
| 13 | Trockengaszuführungsleitung |
| 14 | Kühlflansch |
| 15 | Kühlfinger |
| 16 | Platinthermometer |
| 17 | Wärmewiderstand |
| 18 | Stoffprobe |
| 19 | Meßeinrichtung |
| 20 | Auswerteeinrichtung |
| 21 | mathematisches Modell |

**Patentansprüche**

1. Verfahren zur Stoffuntersuchung, bei dem ein Stoff einer dynamischen Anregung ausgesetzt wird, die eine beobachtbare Antwort hervorruft, und bei dem aus dem Zusammenhang zwischen der Anregung und der Antwort eine Kenngröße des Stoffs ermittelt wird, bei dem der Zusammenhang zwischen der Anregung und der Antwort durch ein parametrisches Modell, für das eine bestimmte Modellstruktur in Form einer Differenzengleichung mit einer endlichen Anzahl unbestimmter Parameter als Koeffizienten vorgegeben wird, ausgedrückt wird, und bei dem die Parameter des Modells aus einer Zeitreihe gleich beabstandeter Werte der Anregung und zugehöriger Messwerte der Antwort im Zeitbereich berechnet werden, **dadurch gekennzeichnet, dass** aus den solchermaßen berechneten Parametern unmittelbar die Transferfunktion im Frequenzbereich als Quotient zweier Polynome, deren Koeffizienten die Parameter sind, bestimmt wird und die Kenngröße unmittelbar aus der Transferfunktion im Frequenzbereich als deren Betrag und/oder Phase berechnet wird.

2. Verfahren nach Anspruch 1, **dadurch gekennzeichnet, daß** als Kenngröße der Wert des Betrags der Transferfunktion für mindestens einen Wert der Frequenz berechnet wird.

3. Verfahren nach Anspruch 2, **dadurch gekennzeichnet, daß** als Kenngröße der Wert des Betrags der Transferfunktion für den Frequenzwert Null berechnet wird.

4. Verfahren nach Anspruch 1, **dadurch gekennzeichnet, daß** als Kenngröße der Phasenwinkel des Wertes der Transferfunktion für mindestens einen Wert der Frequenz berechnet wird.

5. Verfahren nach einem der Ansprüche 1 bis 4, **dadurch gekennzeichnet, daß** zur Bestimmung der Parameter des Modells eine Zeitreihe zeitlich gleich beabstandeter Werte der Anregung und zugehöriger Meßwerte der Antwort verwendet, aus diesen Parametern die z-Transformierte der Transferfunktion berechnet und für rein imaginäre Werte von z als Transferfunktion im Frequenzbereich verwendet wird.

6. Verfahren nach Anspruch 5, **dadurch gekennzeichnet, daß** der Zusammenhang zwischen der Anregung und der Antwort als Differenzengleichung dargestellt wird, in der eine Anzahl nb zeitgleich beabstandeter Werte $u_{k-1}$, ..., $u_{k-nb}$ der Anregung mit einer entsprechenden Anzahl von Koeffizienten $b_1$, ..., $b_{nb}$ und eine Anzahl na zugehöriger Werte $y_{k-1}$, ..., $y_{k-na}$ der Antwort mit einer entsprechenden Anzahl von Koeffizienten $a_1$, ..., $a_{na}$ multipliziert wird, wobei diese Koeffizienten $a_1$, ..., $a_{na}$, $b_1$, ..., $b_{nb}$ die Modellparameter darstellen.

7. Verfahren nach Anspruch 6, **dadurch gekennzeichnet, daß** in die Differenzengleichung eine zu dessen Auflösung nach den Polynomkoeffizienten ausreichende Zeitreihe von Werten der Anregung und Meßwerten der Antwort eingesetzt wird.

8. Verfahren nach einem der Ansprüche 5 bis 7, **dadurch gekennzeichnet, daß** die Parameter für ein mindestens die zu ihrer Bestimmung dienende Zeitreihe der Werte der Anregung umfassendes Zeitintervall als zeitlich konstant angesetzt werden.

9. Verfahren nach einem der Ansprüche 5 bis 8, **dadurch gekennzeichnet, daß** für unterschiedliche Zeitintervalle die Parameter mittels innerhalb jedes Zeitintervalls gewählter Zeitreihen jeweils getrennt bestimmt werden.

10. Verfahren nach einem der Ansprüche 1 bis 9, **dadurch gekennzeichnet, daß** das Modell als zeitinvariant und linear angesetzt wird.

11. Verfahren nach Anspruch 10, **dadurch gekennzeichnet, daß** dem zeitinvarianten, linearen Anteil ein zur Berücksichtigung eines nichtlinearen Anteils in der Antwort dienender mathematischer Ausdruck hinzugefügt wird.

12. Verfahren nach Anspruch 7, **dadurch gekennzeichnet, daß** ein bei der Auflösung auftretender Gleichungsfehler minimiert wird.

13. Verfahren nach einem der Ansprüche 1 bis 12, **dadurch gekennzeichnet, daß** es sich bei der Stoffuntersuchung um ein Thermoanalyseverfahren handelt.

14. Verfahren nach einem der Ansprüche 1 bis 13, **dadurch gekennzeichnet, daß** die Anregung eine Anregungsgröße enthält, die einer veränderlichen Temperatur entspricht.

15. Verfahren nach einem der Ansprüche 1 bis 13, **dadurch gekennzeichnet, daß** die Anregung eine Anregungsgröße enthält, die einer veränderlichen Leistung entspricht.

16. Verfahren nach einem der Ansprüche 1 bis 13, **dadurch gekennzeichnet, daß** die Anregung eine Anregungsgröße enthält, die einem veränderlichen Druck entspricht.

17. Verfahren nach einem der Ansprüche 1 bis 13, **dadurch gekennzeichnet, daß** die Anregung eine Anregungsgröße enthält, die einer veränderlichen Strahlung entspricht.

18. Verfahren nach einem der Ansprüche 1 bis 13, **dadurch gekennzeichnet, daß** die Anregung eine Anregungsgröße enthält, die einer veränderlichen Spannung oder Dehnung entspricht.

19. Verfahren nach einem der Ansprüche 1 bis 13, **dadurch gekennzeichnet, daß** die Anregung eine Anregungsgröße enthält, die einer veränderlichen Gasatmosphäre entspricht.

20. Verfahren nach einem der Ansprüche 1 bis 13, **dadurch gekennzeichnet, daß** die Anregung eine Anregungsgröße enthält, die einem veränderlichen Magnetfeld entspricht.

21. Verfahren nach Anspruch 13, **dadurch gekennzeichnet, daß** die Antwort eine Antwortgröße enthält, die einer Temperaturdifferenz eines dynamischen Thermoanalyseverfahrens entspricht.

22. Verfahren nach Anspruch 13, **dadurch gekennzeichnet, daß** die Antwort eine Antwortgröße enthält, die einem Wärmestrom eines dynamischen Thermoanalyseverfahrens entspricht.

**23.** Verfahren nach Anspruch 22, **dadurch gekennzeichnet, daß** der Wärmestrom eine Differenz von Wärmeströmen zu einer Probe des Stoffs und einem bekannten Referenzstoff ist.

**24.** Verfahren nach Anspruch 13, **dadurch gekennzeichnet, daß** die Antwort eine Antwortgröße enthält, die einer Heizleistungsdifferenz eines dynamischen Leistungskompensations-Thermoanalyseverfahrens entspricht.

**25.** Verfahren nach Anspruch 13, **dadurch gekennzeichnet, daß** die Antwort eine Antwortgröße enthält, die einer Längenänderung eines dynamischen thermomechanischen Analyseverfahrens entspricht.

**26.** Verfahren nach Anspruch 13, **dadurch gekennzeichnet, daß** die Antwort eine Antwortgröße enthält, die einer Gewichtsänderung eines dynamischen thermogravimetrischen Analyseverfahrens entspricht.

**27.** Verfahren nach einem der Ansprüche 1 bis 12, **dadurch gekennzeichnet, daß** die Antwort eine Antwortgröße enthält, die einer Kraft eines dynamischen mechanischen Analyseverfahrens entspricht.

**28.** Verfahren nach einem der Ansprüche 1 bis 12, **dadurch gekennzeichnet, daß** die Antwort eine Antwortgröße enthält, die einer Längenänderung eines dynamischen mechanischen Analyseverfahrens entspricht.

**29.** Verfahren nach einem der Ansprüche 1 bis 12, **dadurch gekennzeichnet, daß** die Antwort eine Antwortgröße enthält, die einer Spannungsänderung eines dynamischen dielektrischen Analyseverfahrens entspricht.

**30.** Verfahren nach einem der Ansprüche 1 bis 29, **dadurch gekennzeichnet, daß** die Anregung in einer zur Durchführung des Verfahrens bestimmten Vorrichtung in der Abwesenheit des zu untersuchenden Stoffs hervorgerufen und aus dem solchermaßen bestimmten Modell die charakteristischen Größen der Vorrichtung bestimmt werden.

**31.** Vorrichtung zur Durchführung des Verfahrens nach einem der Ansprüche 1 bis 30, mit einer Einrichtung, von der eine Probe des Stoffs einer dynamischen Anregung aussetzbar ist, die eine beobachtbare Antwort hervorruft, einer Einrichtung zum Messen der Antwort und einer Auswerteeinrichtung zum Ermitteln einer Kenngröße des Stoffs aus dem Zusammenhang zwischen der Anregung und Meßwerten der Antwort aus der Meßeinrichtung, wobei die Auswerteeinrichtung eine Recheneinrichtung aufweist, in der für ein den Zusammenhang zwischen der Anregung und der Antwort beschreibendes parametrisches Modell mit einer bestimmten Modellstruktur in Form einer Differenzengleichung und einer endlichen Anzahl unbestimmter Parameter als Koeffizienten aus einer Zeitreihe gleich beabstandeter Werte der Anregung und zugehöriger Messwerte der Antwort im Zeitbereich die Parameter berechenbar sind, **dadurch gekennzeichnet, dass** durch die Recheneinrichtung aus den solchermaßen berechneten Parametern unmittelbar die Transferfunktion im Frequenzbereich als Quotient zweier Polynome, dem Koeffizienten die Parameter sind, bestimmbar und die Kenngröße unmittelbar aus der Transferfunktion im Frequenzbereich als deren Betrag und/oder Phase berechenbar ist.

**32.** Vorrichtung nach Anspruch 31, **dadurch gekennzeichnet, daß** die Anregungseinrichtung eine einen Temperaturverlauf als Funktion der Zeit erzeugende Einrichtung und eine zur thermischen Ankopplung der Probe dienende Einrichtung aufweist, wobei die Meßeinrichtung zur Messung eines von der Probe beeinflußten Wärmestroms dient.

**33.** Vorrichtung nach Anspruch 32, **dadurch gekennzeichnet, daß** die Ankopplungseinrichtung eine zur symmetrischen thermischen Ankopplung eines Referenzmaterials dienende Einrichtung aufweist und die Meßeinrichtung zur Messung der Differenz zwischen dem Wärmestrom zur Probe und dem Wärmestrom zum Referenzmaterial dient.

**34.** Vorrichtung nach Anspruch 31, **dadurch gekennzeichnet, daß** die Anregungseinrichtung eine einen Temperaturverlauf als Funktion der Zeit erzeugende Einrichtung, eine zur thermischen Ankopplung der Probe und eines Referenzmaterials dienende Einrichtung und eine eine Temperaturdifferenz zwischen der Probe und dem Referenzmaterial auf Null regelnde Einrichtung aufweist, wobei die Meßeinrichtung zur Messung der für die Nullregelung der Temperaturdifferenz erforderlichen Differenz zwischen den der Probe und dem Referenzmaterial zugeführten Heizleistungen dient.

**35.** Vorrichtung nach Anspruch 31, **dadurch gekennzeichnet, daß** die Anregungseinrichtung eine einen Temperaturverlauf als Funktion der Zeit erzeugende Einrichtung und eine zur thermischen Ankopplung der Probe dienende Einrichtung aufweist, wobei die Meßeinrichtung zur Messung einer Längenänderung der Probe dient.

**36.** Vorrichtung nach einem der Ansprüche 31 bis 35, **dadurch gekennzeichnet, daß** eine die Werte des Anregungssignals liefernde Einrichtung zum Messen eines der Anregung entsprechenden Anregungssignals vorgesehen ist.

**Claims**

1. A method for analyzing a substance, in which a substance is subjected to dynamic excitation, which produces an observable response, and in which a characteristic variable of the substance is determined based on the relationship between the excitation and the response, in which the relationship between the excitation and the response is given by a parametric model, whereby a specific model structure in the form of a difference equation with a finite number of indeterminate parameters is given as coefficients, and in which the parameters of the model are calculated from a time series of equally spaced values of the excitation and related measured values of the response in the time domain, **characterized in that** the transfer function in the frequency domain is determined directly from the thus calculated parameters as the quotient of two polynomials, whose coefficients are the parameters, and the characteristic variable is calculated directly from the transfer function in the frequency domain as its magnitude and/or phase.

2. A method according to claim 1, **characterized in that** the value of the magnitude of the transfer function is calculated as the characteristic variable for at least one value of the frequency.

3. A method according to Claim 2, **characterized in that** the value of the magnitude of the transfer function is calculated as the parameter for the zero-frequency value.

4. A method according to claim 1, **characterized in that** the phase angle of the value of the transfer function for at least one value of the frequency is calculated as the characteristic variable.

5. A method according to any of claims 1 to 4, **characterized in that** in order to determine the model parameters, a time series of temporally equidistant excitation values and related measured response values is used, and based on these parameters, the z-transform of the transfer function is calculated and used as a transfer function in the frequency domain for purely imaginary values of z.

6. A method according to Claim 5, **characterized in that** the relationship between the excitation and the response is represented as a difference equation, in which a number nb of simultaneously spaced excitation values $u_{k-1}$, ..., $u_{k-nb}$ is multiplied by a corresponding number of coefficients $b_1$, ..., $b_{nb}$, and a number na of related response values $y_{k-1}$, ..., $y_{k-na}$ is multiplied by a corresponding number of coefficients $a_1$,..., $a_{na}$, whereby these coefficients $a_1$, ..., $a_{na}$, $b_1$... , $b_{nb}$ represent the model parameters.

7. A method according to Claim 6, **characterized in that** a value time series of excitation and measured response values is used in the difference equation, which times series is sufficient for its resolution according to the polynomial coefficients.

8. A method according to any of claims 5 to 7, **characterized in that** the parameters for a time interval including at least the series of excitation values used in their determination are set as constant in time.

9. A method according to any of claims 5 to 8, **characterized in that** the parameters are determined separately for different time intervals by means of time series selected within each time interval.

10. A method according any of claims 1 to 9, **characterized in that** the model is set as time-invariant and linear.

11. A method according to claim 10, **characterized in that** a mathematical expression used for considering a nonlinear component in the response is added to the time-invariant, linear component.

12. A method according to claim 7, **characterized in that** an equation error occurring during its resolution is minimized.

13. A method according to any of claims 1 to 12, **characterized in that** the substance analysis is a thermal analysis method.

14. A method according to any one of claims 1 to 13, **characterized in that** the excitation includes an excitation variable corresponding to a variable temperature.

15. A method according to any of claims1 to 13, **characterized in that** the excitation includes an excitation variable corresponding to a variable capacity.

16. A method according to any of claims1 to 13, **characterized in that** the excitation includes an excitation variable corresponding to a variable pressure.

17. A method according to any of claims1 to 13, **characterized in that** the excitation includes an excitation variable corresponding to a variable radiation.

18. A method according to any of claims1 to 13, **characterized in that** the excitation includes an excitation variable corresponding to a variable stress or strain.

19. A method according to any of claims1 to 13, **characterized in that** the excitation includes an excitation variable corresponding to a variable gas atmosphere.

20. A method according to any of claims1 to 13, **characterized in that** the excitation includes an excitation variable corresponding to a magnetic field.

21. A method according to claim 13, **characterized in that** the response includes a response variable, which corresponds to a temperature difference of a dynamic thermal analysis method.

22. A method according to claim 13, **characterized in that** the response includes a response variable, which corresponds to a heat flow of a dynamic thermal analysis method.

23. A method according to claim 22, **characterized in that** the heat flow represents a difference of heat flows [relative] to a sample of the substance and a known reference substance.

24. A method according to claim 13, **characterized in that** the response includes a response variable corresponding to a heating power difference of a dynamic power compensation thermal analysis method.

25. A method according to claim 13, **characterized in that** the response includes a response variable corresponding to a change in length of a dynamic thermomechanical analysis method.

26. A method according to claim 13, **characterized in that** the response includes a response variable, which corresponds to a change in weight of a dynamic thermogravimetric analysis method.

27. A method according to claim 1 to 12, **characterized in that** the response includes a response variable corresponding to a force of a dynamic mechanical analysis method.

28. A method according to claim 1 to 12, **characterized in that** the response includes a response variable corresponding to a change in length of a dynamic mechanical analysis method.

29. A method according to claim 1 to 12, **characterized in that** the response includes a response variable corresponding to a voltage change of a dynamic dielectric analysis method.

30. A method according to any of claims 1 to 29, **characterized in that** the excitation is caused in an apparatus designed to carry out the method in the absence of the substance to be examined and the characteristic dimensions of the apparatus are determined based on the model thus determined.

31. An apparatus for carrying out the method according to any of claims 1 to 30, comprising a device with which a sample of the substance may be subjected to dynamic excitation, which produces an observable response, a device for measuring the response, and an evaluation device for determining a characteristic variable of the substance based on the relationship between the excitation and the measured values of the response from the measuring device, wherein the evaluation device has a computing device, in which the parameters can be calculated for a parametric model describing the relationship between the excitation and the response and with a specific model structure in the form of a difference equation and a finite number of indefinite parameters as coefficients based on a time series of equally spaced excitation values and related measured values of the response in the time domain, **characterized in that** the transfer function in the frequency domain can be determined directly as a quotient of two polynomials, whose coefficients are the parameters, via the computing device based on the parameters thus calculated, and the characteristic variable can be calculated directly based on the transfer function in the frequency domain as its magnitude and/or phase.

**32.** An apparatus according to claim 31, **characterized in that** the excitation device has a device generating a temperature curve as a function of time and a device for thermal coupling of the sample, wherein the measuring device is used to measure a heat flow influenced by the sample.

**33.** An apparatus according to claim 32, **characterized in that** the coupling device has a device for symmetrical thermal coupling of a reference material, and the measuring device is used to measure the difference between the heat flow to the sample and the heat flow to the reference material.

**34.** An apparatus according to claim 31, **characterized in that** the excitation device has a device generating a temperature curve as a function of time, a device for thermal coupling of the sample and a reference material, and a device regulating a temperature difference between the sample and the reference material [down] to zero, wherein the measuring device is used to measure the difference between the heating powers supplied to the sample and the reference material, which difference is required to regulate the temperature difference to zero, and wherein the measuring device is used measure the difference between the heating powers supplied to the sample and the reference material.

**35.** An apparatus according to claim 31, **characterized in that** the excitation device has a device generating a temperature curve as a function of time and a device for thermal coupling of the sample, wherein the measuring device is used to measure a change in length of the sample.

**36.** An apparatus according to any of claims 31 to 35, **characterized in that** a device supplying the values of the excitation signal for measuring an excitation signal corresponding to the excitation is provided.

**Revendications**

**1.** Procédé pour analyser une substance, dans lequel une substance est soumise à une excitation dynamique, qui provoque une réponse observable, et dans lequel une grandeur caractéristique de la substance est déterminée à partir de la relation entre l'excitation et la réponse, dans lequel la relation entre l'excitation et la réponse est exprimée par un modèle paramétrique, pour lequel une structure de modèle déterminée est prédéfinie sous la forme d'une équation différentielle avec un nombre fini de paramètres indéterminés en tant que coefficients, et dans lequel les paramètres du modèle sont calculés à partir d'une série chronologique de valeurs équidistantes de l'excitation et de valeurs de mesure correspondantes de la réponse dans la plage de temps, **caractérisé en ce que** la fonction de transfert dans la plage de fréquence est déterminée directement à partir des paramètres calculés de cette manière en tant que quotient de deux polynômes, dont les coefficients sont les paramètres, et la grandeur caractéristique est calculée directement à partir de la fonction de transfert dans la plage de fréquence en tant que sa valeur et/ou phase.

**2.** Procédé selon la revendication 1, **caractérisé en ce que** la valeur de la valeur de la fonction de transfert est calculée en tant que grandeur caractéristique pour au moins une valeur de la fréquence.

**3.** Procédé selon la revendication 2, **caractérisé en ce que** la valeur de la valeur de la fonction de transfert est calculée en tant que grandeur caractéristique pour la valeur de fréquence zéro.

**4.** Procédé selon la revendication 1, **caractérisé en ce que** l'angle de phase de la valeur de la fonction de transfert est calculé en tant que grandeur caractéristique pour au moins une valeur de la fréquence.

**5.** Procédé selon l'une quelconque des revendications 1 à 4, **caractérisé en ce que** pour la détermination des paramètres du modèle, une série chronologique de valeurs équidistantes dans le temps de l'excitation et de valeurs de mesure correspondantes de la réponse est utilisée, la transformée z de la fonction de transfert est calculée à partir de ces paramètres et utilisée pour des valeurs purement imaginaires de z en tant que fonction de transfert dans la plage de fréquence.

**6.** Procédé selon la revendication 5, **caractérisé en ce que** la relation entre l'excitation et la réponse est représentée en tant qu'équation différentielle, dans laquelle un nombre nb de valeurs équidistantes dans le temps $u_{k-1}$, ..., $u_{k-nb}$ de l'excitation est multiplié par un nombre correspondant de coefficients $b_1$, ..., $b_{nb}$ et un nombre na de valeurs correspondantes $y_{k-1}$, ..., $y_{k-na}$ de la réponse est multiplié par un nombre correspondant de coefficients $a_1$, ..., $a_{na}$, dans lequel ces coefficients $a_1$, ..., $a_{na}$, $b_1$, ..., $b_{nb}$ représentent les paramètres de modèle.

7. Procédé selon la revendication 6, **caractérisé en ce que** dans l'équation différentielle, une série chronologique, suffisant à sa résolution selon les coefficients polynomiaux, de valeurs de l'excitation et de valeurs de mesure de la réponse est utilisée.

8. Procédé selon l'une quelconque des revendications 5 à 7, **caractérisé en ce que** les paramètres sont posés constants dans le temps pour un intervalle de temps comprenant au moins la série chronologique servant à leur détermination des valeurs de l'excitation.

9. Procédé selon l'une quelconque des revendications 5 à 8, **caractérisé en ce que** les paramètres sont déterminés respectivement séparément pour différents intervalles de temps au moyen de séries chronologique sélectionnées à l'intérieur de chaque intervalle de temps.

10. Procédé selon l'une quelconque des revendications 1 à 9, **caractérisé en ce que** le modèle est posé invariant dans le temps et linéaire.

11. Procédé selon la revendication 10, **caractérisé en ce qu'**une expression mathématique servant à la prise en compte d'une part non linéaire dans la réponse est ajoutée à la part linéaire, invariante dans le temps

12. Procédé selon la revendication 7, **caractérisé en ce qu'**une erreur d'équation survenant lors de la résolution est minimisée.

13. Procédé selon l'une quelconque des revendications 1 à 12, **caractérisé en ce que** l'analyse de la substance est une méthode d'analyse thermique.

14. Procédé selon l'une quelconque des revendications 1 à 13, **caractérisé en ce que** l'excitation contient une grandeur d'excitation, qui correspond à une température variable.

15. Procédé selon l'une quelconque des revendications 1 à 13, **caractérisé en ce que** l'excitation contient une grandeur d'excitation, qui correspond à une puissance variable.

16. Procédé selon l'une quelconque des revendications 1 à 13, **caractérisé en ce que** l'excitation contient une grandeur d'excitation, qui correspond à une pression variable.

17. Procédé selon l'une quelconque des revendications 1 à 13, **caractérisé en ce que** l'excitation contient une grandeur d'excitation, qui correspond à un rayonnement variable.

18. Procédé selon l'une quelconque des revendications 1 à 13, **caractérisé en ce que** l'excitation contient une grandeur d'excitation, qui correspond à une tension ou à un allongement variable.

19. Procédé selon l'une quelconque des revendications 1 à 13, **caractérisé en ce que** l'excitation contient une grandeur d'excitation, qui correspond à une atmosphère de gaz variable.

20. Procédé selon l'une quelconque des revendications 1 à 13, **caractérisé en ce que** l'excitation contient une grandeur d'excitation, qui correspond à un champ magnétique variable.

21. Procédé selon la revendication 13, **caractérisé en ce que** la réponse contient une grandeur de réponse, qui correspond à une différence de température d'une méthode d'analyse thermique dynamique.

22. Procédé selon la revendication 13, **caractérisé en ce que** la réponse contient une grandeur de réponse, qui correspond à un flux de chaleur d'une méthode d'analyse thermique dynamique.

23. Procédé selon la revendication 22, **caractérisé en ce que** le flux de chaleur est une différence de flux de chaleur vers un échantillon de la substance et une substance de référence connue.

**24.** Procédé selon la revendication 13, **caractérisé en ce que** la réponse contient une grandeur de réponse, qui correspond à une différence de puissance de chauffage d'une méthode d'analyse thermique de compensation de puissance dynamique.

**25.** Procédé selon la revendication 13, **caractérisé en ce que** la réponse contient une grandeur de réponse, qui correspond à un changement de longueur d'une méthode d'analyse thermomécanique dynamique.

**26.** Procédé selon la revendication 13, **caractérisé en ce que** la réponse contient une grandeur de réponse, qui correspond à un changement de poids d'une méthode d'analyse thermogravimétrique dynamique.

**27.** Procédé selon l'une quelconque des revendications 1 à 12, **caractérisé en ce que** la réponse contient une grandeur de réponse, qui correspond à une force d'une méthode d'analyse mécanique dynamique.

**28.** Procédé selon l'une quelconque des revendications 1 à 12, **caractérisé en ce que** la réponse contient une grandeur de réponse, qui correspond à un changement de longueur d'une méthode d'analyse mécanique dynamique.

**29.** Procédé selon l'une quelconque des revendications 1 à 12, **caractérisé en ce que** la réponse contient une grandeur de réponse, qui correspond à un changement de tension d'une méthode d'analyse diélectrique dynamique.

**30.** Procédé selon l'une quelconque des revendications 1 à 29, **caractérisé en ce que** l'excitation est provoquée dans un dispositif déterminé pour la réalisation du procédé en l'absence de la substance à analyser et les grandeurs caractéristiques du dispositif sont déterminées à partir d'un modèle déterminé de cette manière.

**31.** Dispositif de réalisation du procédé selon l'une quelconque des revendications 1 à 30, avec un équipement, par lequel un échantillon de la substance peut être soumis à une excitation dynamique, qui provoque une réponse observable, un équipement pour mesurer la réponse et un équipement d'évaluation pour déterminer une grandeur caractéristique de la substance à partir de la relation entre l'excitation et des valeurs de mesure de la réponse de l'équipement de mesure, dans lequel l'équipement d'évaluation présente un équipement de calcul, dans lequel les paramètres peuvent être calculés pour un modèle paramétrique décrivant la relation entre l'excitation et la réponse avec une structure de modèle déterminée sous la forme d'une équation différentielle et un nombre fini de paramètres indéterminés en tant que coefficients à partir d'une série chronologique de valeurs équidistantes de l'excitation et de valeurs de mesure correspondantes de la réponse dans la plage de temps, **caractérisé en ce que** la fonction de transfert dans la plage de fréquence peut être déterminée directement par l'équipement de calcul à partir des paramètres calculés de cette manière en tant que quotient de deux polynômes, dont les coefficients sont les paramètres, et la grandeur caractéristique peut être calculée directement à partir de la fonction de transfert dans la plage de fréquence en tant que sa valeur et/ou phase.

**32.** Dispositif selon la revendication 31, **caractérisé en ce que** l'équipement d'excitation présente un équipement générant une courbe de température en fonction du temps et un équipement servant à l'accouplement thermique de l'échantillon, dans lequel l'équipement de mesure sert à la mesure d'un flux de chaleur influencé par l'échantillon.

**33.** Dispositif selon la revendication 32, **caractérisé en ce que** l'équipement d'accouplement présente un équipement servant à l'accouplement thermique symétrique d'un matériau de référence et l'équipement de mesure sert à la mesure de la différence entre le flux de chaleur vers l'échantillon et le flux de chaleur vers le matériau de référence.

**34.** Dispositif selon la revendication 31, **caractérisé en ce que** l'équipement d'excitation présente un équipement générant une courbe de température en fonction du temps, un équipement servant à l'accouplement thermique de l'échantillon et d'un matériau de référence et un équipement réglant sur zéro une différence de température entre l'échantillon et le matériau de référence, dans lequel l'équipement de mesure sert à la mesure de la différence nécessaire au réglage sur zéro de la différence de température entre les puissances de chauffage amenées à l'échantillon et au matériau de référence.

**35.** Dispositif selon la revendication 31, **caractérisé en ce que** l'équipement d'excitation présente un équipement générant une courbe de température en fonction du temps et un équipement servant à l'accouplement thermique de l'échantillon, dans lequel l'équipement de mesure sert à la mesure d'un changement de longueur de l'échantillon.

**36.** Dispositif selon l'une quelconque des revendications 31 à 35, **caractérisé en ce qu'**un équipement fournissant les valeurs du signal d'excitation est prévu pour la mesure d'un signal d'excitation correspondant à l'excitation.

EP 1 834 172 B1

**Fig. 1**

u

u → | Dynamisches System | → y

$t_{k-N}$  $t_k$  t

$t_{k-N}$  $t_k$  t

**Fig. 2**

17

**Fig. 3**

**Fig. 4**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0559362 A1
- EP 1091208 A

- EP 1494126 A1

### In der Beschreibung aufgeführte Nicht-Patentliteratur

- **ISERMANN, R.** *Identifikation dynamischer Systeme,* 1998, vol. I, 1-6, 17
- *IDENTIFIKATION DYNAMISCHER SYSTEME,* 4-39, 63, , 64

- MatLab User Manual: System Identification Toolbox User's Guide. The MathWork, Inc, November 2000, 3-37, 3-39